# EUROPEAN PATENT SPECIFICATION

(11) **EP 3 560 161 B1**
(45) Date of publication and mention of the grant of the patent: **30.08.2023**
(21) Application number: 16822463.2
(22) Date of filing: 23.12.2016
(51) Int. Cl.: H04L 65/1043, H04L 65/403, H04L 65/1069, H04L 65/1083

(54) **H.248 CONTROL FOR MULTISTREAM MULTIMEDIA CONFERENCES**
H.248-STEUERUNG FÜR MULTISTREAM-MULTIMEDIAKONFERENZEN
COMMANDE H.248 POUR CONFÉRENCES MULTIMÉDIAS À FLUX MULTIPLES

(43) Date of publication of application: 30.10.2019
(73) Proprietor: Nokia Technologies Oy, 02610 Espoo (FI)
(72) Inventor: BELLING, Thomas, 85435 Erding (DE)
(74) Representative: Nokia EPO representatives
(86) International application number: PCT/EP2016/082511
(87) International publication number: WO 2018/113989

(56) References cited:
- "3rd Generation Partnership Project; Technical Specification Group Core Network and Terminals; Multimedia Resource Function Controller (MRFC) - Multimedia Resource Function Processor (MRFP) Mp interface: Procedures Descriptions (Release 14)", 3GPP STANDARD; 3GPP TS 23.333, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V14.0.0, 17 December 2016 (2016-12-17), pages 1-165, XP051230100, [retrieved on 2016-12-17] cited in the application
- EDITOR1 (ERICSSON LM): "MMCMH Permanent Document", 3GPP DRAFT; S4-150801 MMCMH PERMANENT DOCUMENT V0.2.4_REV, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. Rennes, France; 20150606 - 20150610 23 August 2015 (2015-08-23), XP051015138, Retrieved from the Internet: URL:http://www.3gpp.org/ftp/Meetings_3GPP_ SYNC/SA4/Docs/ [retrieved on 2015-08-23]

## Description

### Field of the invention

The present invention relates to an apparatus, a method, and a computer program product related to multimedia conferences. More particularly, the present invention relates to an apparatus, a method, and a computer program product of control of a multistream multimedia conference.

### Abbreviations

- 3GPP: Third Generation Partnership Project
- 4G: 4^{th} Generation
- 5G: 5^{th} Generation
- AMR: Adaptive Multi-Rate
- AMR-WB: Adaptive Multi-Rate - WideBand
- BFCP: Binary Floor Control Protocol
- CDMA: Code Division Multiple Access
- EDGE: Enhanced Datarate for GSM Evolution
- ffs: for further study
- ID: Identification / Identifier
- ITU-T: International Telecommunication Union - Telecommunication
- LTE: Long Term Evolution
- LTE-A: LTE-Advanced
- MMCMH: Multi-stream Multiparty Conferencing Media Handling
- MRF: Multimedia Resource Function
- MRFC: Multimedia Resource Function Controller
- MRFP: Multimedia Resource Function Processor
- MTSI: Multimedia Telephony Service for IMS
- RTCP: RTP Control Protocol
- RTP: Real-time Transport Protocol
- SA: System Architecture
- SDP: Session Description Protocol
- SEP: Stream End Point
- TR: Technical Report
- TS: Technical Specification
- UMTS: Universal Mobile Telecommunications System
- UTRAN: UMTS Terrestrial Radio Access Network

### Background of the invention

3GPP SA4 has studied media handling aspects of multi-stream multiparty conferencing for Multimedia Telephony Service for IMS (MTSI) in 3GPP TR 26.980 and has agreed related normative procedures for "Multi-party Multimedia Conference Media Handling" (MMCMH) in Annex S of 3GPP TS 26.114 (with examples in Annex T).

Typically, for MMCMH each media sender will send at least one audio stream and two video streams (a main video with higher resolution and a thumbnail video with lower resolution). Each media sender will receive one or more audio streams; multiple audio streams can be used e.g. to reflect the spatial distribution of speakers. Multiple video streams, each depicting a peer conference participant, are sent towards a conference participants to allow the device of that conference participant to render those video streams in an optimal fashion for the size, resolution and orientation of its screen. Different use cases of media handling in conferencing are presented in 3GPP Tdoc S4-150801 (XP51015138).

3GPP CT4 is now specifying the related procedures for a media resource function (MRF) that acts as conference bridge for such a conference in 3GPP TS 23.333. The MRFC is decomposed in a controller (MRFC) and media processor (MRFP) part, and the MRFC controls the MRFP via the H.248 protocol defined by ITU-T. The latest version of the related CT4 specification is contained in document C4-166229 and still marks many issues as "for further study" via editor's notes.

In the MRFP and in the communication between MRFC and MRFP, the media streams are characterized by their stream end points.

### Summary of the invention

It is an object of the present invention to improve the prior art.

According to a first aspect of the invention, there is provided an apparatus, according to independent claim 1.

The at least one memory and the computer program code may be arranged to cause the apparatus to further perform detecting if a second signaling indicating the desire to receive one or more second media streams is received from the sender; instructing the resource function processor to check, for each of the second media streams of at least a subset of the second media streams, if the respective second media stream belongs to the subgroup and to inhibit forwarding of the respective first media stream to the sender if the respective second media stream belongs to the subgroup.

The policy may be instructed in a context attribute.

The policy may be described via enumerating applicable sub-policies out of plural predefined sub-policies, wherein at least some of the predefined sub-policies may include passing or discarding at least some of the first media streams of the subgroup and/or selecting destinations for the media streams depending on the result of the voice activity detection on the audio stream.

The informing the resource function processor that at least a subgroup of the first media streams including the audio stream originates from the sender may be performed by instructing the resource function processor to assign stream endpoints within the same termination for all media streams of the sender or for all media streams of the sender of a same media type, and/or by providing to the resource function processor a reference for at least some streams of the subgroup to one or several other streams within the subgroup via the context identifier and termination identifier assigned to the other streams.

The instructing of the resource function processor to perform voice activity detection on the audio stream may be provided in a local descriptor or a local control descriptor of the audio stream.

The resource function processor may be instructed based on a H.248 protocol.

According to a non-claimed second aspect of the invention, there is provided an apparatus, comprising at least one processor, at least one memory including computer program code, and the at least one processor, with the at least one memory and the computer program code, being arranged to cause the apparatus to at least perform at least performing voice activity detection on a received first audio stream based on an instruction received from a controller; checking if a received first media stream is within a first group based on information about the first group received from the controller, wherein the information about the first group informs that each media stream of the first group including the first audio stream originates from a first sender; monitoring if an instruction to apply a policy on the media streams of the first group is received from the controller; applying the policy on the received first media stream if, according to the information about the first group, the first media stream originates from the first sender and the instruction to apply the policy is received from the controller, wherein the policy includes at least passing or discarding the first media stream and/or selecting destinations for the first media stream depending on a result of the voice activity detection on the first audio stream at least if the first media stream is transporting media of some predefined media types.

The at least one memory and the computer program code may be arranged to cause the apparatus to further perform checking if a second media stream to be sent is within the first group based on information about the first group received from the controller, wherein the information about the first group informs that each media stream of the first group originates from the first sender or is to be sent towards the first sender; inhibiting the forwarding of the second media stream towards the first sender if, according to the information about the first group, the second media stream originates from the first sender.

The policy may be instructed in a context attribute.

The policy received from the controller may be described via enumerating applicable sub-policies out of plural predefined sub-policies, wherein at least some of the predefined sub-policies include, for media stream of some predefined media types, passing or discarding and/or selecting destinations for the media streams depending on the result of the voice activity detection on the first audio stream.

The at least one memory and the computer program code may be arranged to cause the apparatus to further perform storing an identifier of a second group based on information about the second group received from the controller, wherein the information about the second group informs that each media stream of the second group including a second audio stream originates from a second sender, voice activity is detected on the second audio stream, and the second sender is different from the first sender, and selecting one of the plural predefined policies based on the result of the voice activity detection on the first audio stream and the stored identifier of the second group.

The information about the first group received from the controller may be provided by assigning stream endpoints within the same termination for all media streams of the first sender or for all media streams of the first sender of a same media type, and/or by providing a reference for at least some streams of the first group to one or several other streams within the first group via a context identifier and termination identifier assigned to the other streams.

The instruction to perform voice activity detection on the first audio stream may be received in a local descriptor or a local control descriptor of the first audio stream.

The instructions from the controller may be based on a H.248 protocol.

According to a non-claimed third aspect of the invention, there is provided a system, comprising a control apparatus according to the first aspect; and a processing apparatus according to the second aspect; wherein the resource function processor comprises the processing apparatus; the controller comprises the control apparatus; the first group corresponds to the subgroup; the instruction to perform voice activity detection provided by the control apparatus corresponds to the instruction to perform voice activity detection received by the processing apparatus; the instruction to apply the policy provided by the control apparatus corresponds to the instruction to apply the policy received by the processing apparatus.

According to a fourth aspect of the invention, there is provided a method, according to independent claim 2.

The method may further comprise detecting if a second signaling indicating the desire to receive one or more second media streams is received from the sender; instructing the resource function processor to check, for each of the second media streams of at least a subset of the second media streams, if the respective second media stream belongs to the subgroup and to inhibit forwarding of the respective first media stream to the sender if the respective second media stream belongs to the subgroup.

The policy may be instructed in a context attribute.

The policy may be described via enumerating applicable sub-policies out of plural predefined sub-policies, wherein at least some of the predefined sub-policies may include passing or discarding at least some of the first media streams of the subgroup and/or selecting destinations for the media streams depending on the result of the voice activity detection on the audio stream.

The informing the resource function processor that at least a subgroup of the first media streams including the audio stream originates from the sender may be performed by instructing the resource function processor to assign stream endpoints within the same termination for all media streams of the sender or for all media streams of the sender of a same media type, and/or by providing to the resource function processor a reference for at least some streams of the subgroup to one or several other streams within the subgroup via the context identifier and termination identifier assigned to the other streams.

The instructing of the resource function processor to perform voice activity detection on the audio stream may be provided in a local descriptor or a local control descriptor of the audio stream.

The resource function processor may be instructed based on a H.248 protocol.

According to a non-claimed fifth aspect of the invention, there is provided a method, comprising performing voice activity detection on a received first audio stream based on an instruction received from a controller; checking if a received first media stream is within a first group based on information about the first group received from the controller, wherein the information about the first group informs that each media stream of the first group including the first audio stream originates from a first sender; monitoring if an instruction to apply a policy on the media streams of the first group is received from the controller; applying the policy on the received first media stream if, according to the information about the first group, the first media stream originates from the first sender and the instruction to apply the policy is received from the controller, wherein the policy includes at least passing or discarding the first media stream and/or selecting destinations for the first media stream depending on a result of the voice activity detection on the first audio stream at least if the first media stream is transporting media of some predefined media types.

The method may further comprise checking if a second media stream to be sent is within the first group based on information about the first group received from the controller, wherein the information about the first group informs that each media stream of the first group originates from the first sender or is to be sent towards the first sender; inhibiting the forwarding of the second media stream towards the first sender if, according to the information about the first group, the second media stream originates from the first sender.

The policy may be instructed in a context attribute.

The policy received from the controller may be described via enumerating applicable sub-policies out of plural predefined sub-policies, wherein at least some of the predefined sub-policies include, for media stream of some predefined media types, passing or discarding and/or selecting destinations for the media streams depending on the result of the voice activity detection on the first audio stream.

The method may further comprise storing an identifier of a second group based on information about the second group received from the controller, wherein the information about the second group informs that each media stream of the second group including a second audio stream originates from a second sender, voice activity is detected on the second audio stream, and the second sender is different from the first sender, and selecting one of the plural predefined policies based on the result of the voice activity detection on the first audio stream and the stored identifier of the second group.

The information about the first group received from the controller may be provided by assigning stream endpoints within the same termination for all media streams of the first sender or for all media streams of the first sender of a same media type, and/or by providing a reference for at least some streams of the first group to one or several other streams within the first group via a context identifier and termination identifier assigned to the other streams.

The instruction to perform voice activity detection on the first audio stream may be received in a local descriptor or a local control descriptor of the first audio stream.

The instructions from the controller may be based on a H.248 protocol.

Each of the methods of the fourth and fifth aspects may be a method of control for a multistream multimedia conference.

According to a sixth aspect of the invention, there is provided a computer program product as defined in claim 3.

According to some embodiments of the invention, at least one of the following advantages may be achieved:
- User convenience in multimedia conferencing is enhanced;
- Bandwidth requirements are adapted to needs;
- Use case A of 3GPP TR26.980 can be realized;
- Transcoding effort is reduced.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows an apparatus according to an embodiment of the invention;
Fig. 2 shows a method according to an embodiment of the invention;
Fig. 3 shows an apparatus according to an embodiment of the invention;
Fig. 4 shows a method according to an embodiment of the invention;
Fig. 5 shows an apparatus according to an embodiment of the invention; and
Fig. 6 depicts the MRFP configuration for a conference with 4 participants as an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

Among the not yet resolved issues in C4-166229 is the following editor's note:
*Editor's note: It is ffs how the MRFC configures the MRFP to dynamically select whether to pass the main video or the thumbnail video of a conference participant, e.g. depending on whether that conference participant is the current speaker.*

This editor's note relates to use case A in TR 26.980: A typical use case for MMCMH is that each conference participant sends a main and a thumbnail video, and receives one main video (depicting the current speaker) and thumbnail videos for all other or some of the conference participants. For the current speaker, the MRF typically passes the main video to everybody. For each other participant, the MRF typically passes a thumbnail video to all other participants.

According to some embodiments of the invention, when the MRFC configures the MRFP to receive media streams, it indicates for some or all of the streams sent by the same media sender (e.g. the same mobile terminal) that these media streams are sent by the same media sender, requests the MRFP to detect the voice activity of the audio stream(s) received from that sender, and requests the MRFP to select which of all or some of the other received media streams (e.g. video or screenshare) from that sender shall be passed to some or all of the other conference participants based on the observed voice activity of that media sender and possibly also based on current and/or previous observed voice activities of other media senders.

That is, the MRFC detects which media streams are from a same media sender based on the SIP/SDP signalling it exchanges with that media sender, e.g. when establishing or modifying the media conference. Furthermore, the MFRC requests the MRFP to perform voice activity detection on one or more audio streams from that sender. In addition, MRFC instructs the MRFP to apply a certain policy for the media streams received from that media sender, wherein the policy depends on the detected voice activity. In addition, in some embodiments, the selection of the policy may depend on earlier observed voice activities of other media senders *of the same multimedia conference.*

In some embodiments of the invention, when the MRFC configures the MRFP to send media streams, it may also indicate for some or all of the streams to be sent *potentially* towards the same media receiver (e.g. the same mobile terminal) that these media streams are potentially to be sent towards the same media receiver (e.g. the same mobile terminal). The MRFC may also indicate for some or all of the streams sent by a certain media sender combined with that media receiver (e.g. the same mobile terminal) that these media streams are sent by that media sender.

The MRFP can use the information it received from the MRFC according to some embodiments of the invention as follows. That is, hereinafter, some examples of the sub-policies to be applied to the media streams received from the same sender are listed. According to some embodiments of the invention, a policy may comprise one or more of these sub-policies, whereof at least one sub-policy depends on the result of the voice activity detection.
1. The MRFP does not send media streams received from a media sender towards the receiver associated with that sender.
2. The MRFP forwards the received audio stream of the current speaker (i.e. the audio stream where voice activity is detected) to some or all other conference participants (i.e. the audio receivers not associated with the audio stream where voice activity is detected). If the current speaker sends multiple audio streams in different encodings, the MRFP preferably forwards to a media receiver an audio stream out of those audio streams that matches the encoding of an audio stream to that media receiver configured by the MRFC.
3. The MRFP mixes some or all the received audio streams from some or all media senders except for the media sender associated with a given receiver and sends the resulting audio stream(s) to that receiver.
4. The MRFP selects received audio streams to forward or mix and send as audio streams based on instructions of a floor control protocol it receives, such as BFCP.
5. The MRFP selects received audio streams to forward or mix and send as audio streams based on explicit instructions by the MRFC.
6. The MRFP selects video streams to be sent to a receiver from among the videos received from senders not associated with that receiver in such a way that from each other sender at most one media stream is sent to that receiver.
7. The MRFP forwards the main video received from the current speaker (i.e. from the media sender from which an audio stream is received where voice activity is currently detected) to some or all other conference participants. The MRFP preferably sends the video stream towards a receiver with an encoding and resolution matching the encoding and resolution of the main video received from the sender to avoid transcoding. In order to avoid a too frequent switching of video images, the MRFP preferably waits for a short period when detecting voice activity from a new source before switching the video image.
8. The MRFP forwards the main video of the previous speaker (i.e. received from the media sender from which an audio stream is received where the most recent past voice activity has been detected) to the current speaker (i.e. within a media stream towards the receiver associated with the media sender from which an audio stream is received where voice activity is currently detected); it preferably sends the video stream towards that receiver with an encoding and resolution matching the encoding and resolution of the main video received from the sender to avoid transcoding.
9. The MRFP selects the received main video stream to forward to video receivers based on explicit instructions of the MRFC.
10. The MRFP selects the received main video stream to forward to video receivers based on instructions of a floor control protocol it receives, such as BFCP.
11. The MRFP forwards received thumbnail video streams from the most recent previous speaker(s) (i.e. from the media sender(s) from which audio stream(s) are received where the most recent past voice activities have been detected). The MRFP preferably sends the thumbnail media stream towards the receiver with an encoding and resolution matching the encoding and resolution of the thumbnail video received from the sender to avoid transcoding.
12. The MRFP selects the received thumbnail video stream(s) to forward to video receivers based on explicit instructions of the MRFC.
13. The MRFP selects the received thumbnail video stream(s) to forward to video receivers based on instructions of a floor control protocol it receives, such as BFCP.
14. The MRFP reduces the number of video streams sent towards a media receiver and selects only video streams with lower resolution (e.g. thumbnail video streams) if the MRFP receives feedback about increased packet loss from that media receiver (e.g. via the RTCP protocol); the MRFP preferably selects video streams received from the most recent speaker(s) (i.e. from the media sender(s) from which audio stream(s) are received where the most recent voice activities are or have been detected).
15. The MRFP forwards the screenshare media stream received from the current or most recent speaker that sends such a media stream (i.e. from the media sender from which an audio stream is received where voice activity is currently detected or has been detected in the most recent past) to all or some other conference participants.
16. The MRFP selects the received screenshare media stream to forward to screenshare media receivers based on explicit instructions of the MRFC.
17. The MRFP selects the received screenshare media stream to forward to screenshare media receivers based on instructions of a floor control protocol it receives, such as BFCP.
18. In 3GPP TS 26.114, the "ccc-list" SDP attribute has been defined. It describes how the number of media streams that a receiver can receive at the same moment depends on the encoding of the received media streams. The MRFC forwards the "ccc-list" SDP attribute received from a conference participant towards the MRFP and indicates that it relates to the corresponding media receiver, and the MRFP takes this information into account when selecting which media streams to send to that media receiver.
19. If the MRFP does not pass a received media stream to any conference participant, based on any of the criteria above, signal to the sender to pause sending that media stream in accordance with IETF RFC 7728.
20. If the MRFP has previously signalled to a sender to pause sending a media stream and decides to pass that received media stream to some conference participant(s), based on any of the criteria above, signal to the sender to resume sending that media stream in accordance with IETF RFC 7728.

In some embodiments of the invention, the MRFP may apply one or more of these example sub-policies to a media stream. In some embodiments, in a policy, two or more of these example sub-policies may be logically combined by AND, OR, and/or NOT operations. In some embodiments, a policy may comprise a hierarchy of sub-policies to be applied to a specific media stream. E.g., in some embodiments, example sub-policy 1 may have preference over all other example sub-policies. As another example of a hierarchy, example sub-policy 5 may be applied if an explicit instruction from MRFC is present; if not, example sub-policy 4 may be applied if an instruction based on BFCP is present; if not, one of example sub-policies 2 and 3 may be applied. Corresponding hierarchies may be valid for policies comprising example sub-policies 9, 10, 7, and 8; example sub-policies 12, 13, and 11; and example sub-policies 16, 17, and 15, respectively.

In some embodiments, the MRFC instructs the MRFP which of the example sub-policies listed in the bulleted list above to apply. I.e., in these embodiments, the policy comprises only the specified sub-policy. The MRFC preferably provides a new H248 Context Attribute to instruct the MRFP which of the example sub-policies listed in the bulleted list above to apply for the corresponding H.248 context. In some embodiments of the invention, the decision which of the example sub-policies listed in the bulleted list above to apply is left to the MRFP implementation. I.e., in these embodiments, the policy comprises plural sub-policies. In these embodiments, MRFC instructs the MRFP to apply a sub-policy of the policy according to a voice activity from the respective sender. That is, the MRFC then instructs the MRFP such that the MRFP shall autonomously select the media streams to pass based on the policy (comprising plural of the sub-policies above) without indicating the applicable sub-policy or sub-policies (rather than passing media streams within a context based on rules defined in ITU-T H.248.1, such as based on stream identifier numbers) via a new H.248 Context Attribute.

In some embodiments, the MRFC instructs the MRFP to assign H.248 audio terminations or stream end points (SEPs) (where incoming audio streams from conference participants are received at the MRFP and/or outgoing audio streams are sent) to one H.248 context to configure the MRFP to forward or mix the incoming audio streams and send them as outgoing audio streams.

To indicate audio streams that are received from the same media sender or that are to be sent towards the media receiver associated with that media sender (i.e. that are sent to or received from the same conference participant's terminal), the MRFC preferably requests the MRFP to place all such audio streams as stream endpoints within the same H.248 termination.

The instruction to detect voice activity may be a H.248 property of the local descriptor or the local control descriptor of incoming audio streams.

The MRFC may provide a new property within the H.248 termination state descriptor of a termination towards a media sender and associated media receiver for audio streams, or alternatively within the H.248 local control, local and/or remote descriptor of stream end point(s) towards a media sender and associated media receiver for audio streams, to indicate the context ID(s), and termination ID(s), and possibly also stream endpoint ID(s) where other media streams (e.g. video streams or screenshare streams) are received from that media sender or sent towards that media receiver.

In some embodiments, the MRFC may instruct the MRFP to assign H.248 video terminations or stream end points (SEPs) (where incoming video streams from conference participants are received at the MRFP and/or outgoing video streams are sent) to one H.248 context to configure the MRFP to forward the incoming video streams and send them as outgoing video streams.

To indicate video streams that are received from the same media sender or that are to be sent towards the media receiver associated with that media sender (i.e. that are sent to or received from the same conference participant's terminal), the MRFC preferably requests the MRFP to place all such video streams as stream endpoints within the same H.248 termination.

The MRFC may provide a new property within the H.248 termination state descriptor of a termination towards a media sender and associated media receiver for video streams, or alternatively within the H.248 local control, local and/or remote descriptor of stream end point(s) towards a media sender and associated media receiver for video streams, to indicate the context ID(s), and termination ID(s), and possibly also stream endpoint ID(s) where other media stream(s) (e.g. audio streams or screenshare streams) are received from that media sender or sent towards that media receiver. In some embodiments of the invention, the MRFC describes all such termination or stream endpoints; this variant may ease the interpretation of a the "ccc-list" SDP attribute. In some alternative embodiments of the invention, the MRFC only describes the stream endpoint where an incoming audio stream is received from the same media sender and the corresponding voice activity detection is performed.

In some embodiments, the MRFC preferably instructs the MRFP to assign H.248 screenshare terminations or stream end points (SEPs) (where incoming screenshare media streams from conference participants are received at the MRFP and/or outgoing screenshare media streams are sent) to one H.248 context to configure the MRFP to forward the incoming screenshare stream(s) and send them as outgoing screenshare stream(s).

The MRFC may provide a new property within the H.248 termination state descriptor of a termination towards a media sender and associated media receiver for screnshare media streams, or alternatively within the H.248 local control, local and/or remote descriptor of stream end point(s) towards a media sender and associated media receiver for screenshare media streams, to indicate the context ID(s), and termination ID(s), and possibly also stream endpoint ID(s) where other media stream(s) (e.g. audio streams or video streams) are received from that media sender or sent towards that media receiver. In some embodiments of the invention, the MRFC describes all such termination or stream endpoints; this variant may ease the interpretation of a the "ccc-list" SDP attribute. In some alternative embodiments of the invention, the MRFC only describes the stream endpoint where an incoming audio stream is received from the same media sender and the corresponding voice activity detection is performed.

According to some embodiments, the MRFC instructs the MRFP to assign a single H.248 context. To indicate streams that are received from the same media sender or that are to be sent towards the media receiver associated with that media sender (i.e. that are sent to or received from the same conference participant's terminal), the MRFC requests the MRFP to place all such streams as stream endpoints within the same H.248 termination. The MRFC also indicates the media type (e.g. audio, video, application, text, screenshare) for each media stream to the MRFP, and instructs the MRFP to select a stream endpoint of the same media type when deciding where to transfer a received media stream of a given media type.

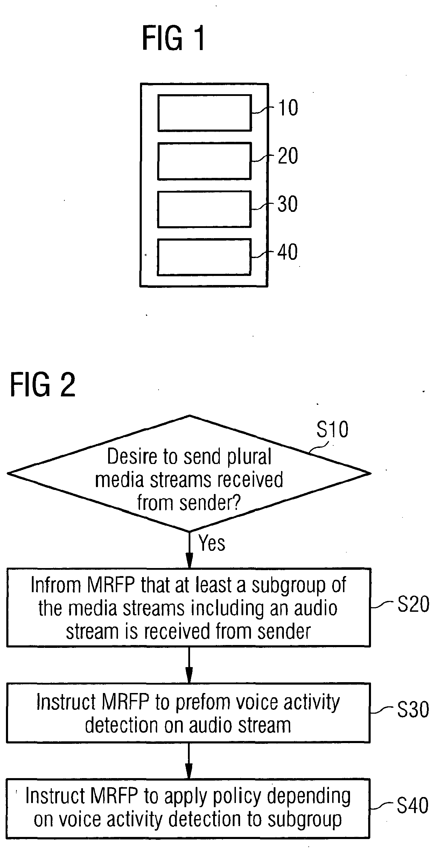

Fig. 1 shows an apparatus according to an embodiment of the invention. The apparatus may be a MRFC or an element thereof. Fig. 2 shows a method according to an embodiment of the invention. The apparatus according to Fig. 1 may perform the method of Fig. 2 but is not limited to this method. The method of Fig. 2 may be performed by the apparatus of Fig. 1 but is not limited to being performed by this apparatus.

The apparatus comprises detecting means 10, informing means 20, first instructing means 30, and second instructing means 40. The detecting means 10, informing means 20, first instructing means 30, and second instructing means 40 may be detecting processor, informing processor, first instructing processor, and second instructing processor, respectively, or may all be implemented on one physical processor.

The detecting means 10 detects if a first signaling indicating the desire to send plural first media streams including an audio stream is received from a sender (S10).

If the first signaling is received from the sender (S10 = yes), the informing means 20 informs the resource function processor that at least a subgroup of the first media streams including the audio stream originates from the sender (S20). The resource function processor may be a MRFP.

If the first signaling is received from the sender (S10 = yes), the first instructing means 30 instructs a resource function processor to perform voice activity detection on the audio stream (S30). The sequence of S20 and S30 is arbitrary. S20 and S30 may be performed one after the other or fully or partly in parallel.

The second instructing means 40 instructs the resource function processor to apply a policy on the subgroup of the first media streams (S40). The policy includes passing or discarding at least some of the first media streams of the subgroup and/or selecting destinations for the media streams depending on a result of the voice activity detection on the audio stream.

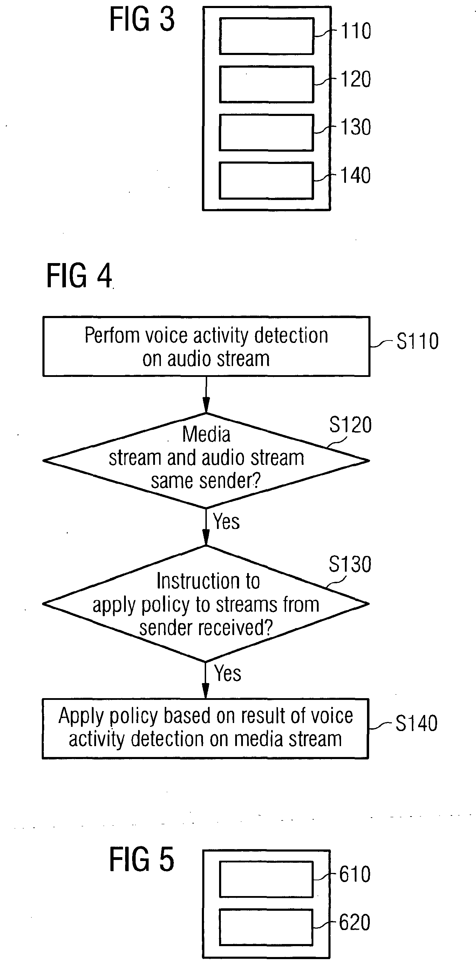

Fig. 3 shows an apparatus according to an embodiment of the invention. The apparatus may be a MRFP or an element thereof. Fig. 4 shows a method according to an embodiment of the invention. The apparatus according to Fig. 3 may perform the method of Fig. 4 but is not limited to this method. The method of Fig. 4 may be performed by the apparatus of Fig. 3 but is not limited to being performed by this apparatus.

The apparatus comprises performing means 110, checking means 120, monitoring means 130, and applying means 140. The performing means 110, checking means 120, monitoring means 130, and applying means 140 may be performing processor, checking processor, monitoring processor, and applying processor, respectively, or may all be implemented on one physical processor.

The performing means 110 performs voice activity detection on a received first audio stream based on an instruction received from a controller. The controller may be a MRFC.

The checking means 120 checks if a received first media stream is within a group based on information about the group received from the controller (S120). The information about the group informs that each media stream of the group including the first audio stream originates from a sender.

The monitoring means 130 monitors if an instruction to apply a policy on the media streams of the group is received from the controller.

The sequence of S110, S120, and S130 is arbitrary. S110, S120, and S130 may be performed one after the other or fully or partly in parallel. In some embodiments, at least one of S120 and S130 may be performed only if in S110 a voice is detected in the audio stream. In some embodiments, at least one of S110 and S130 may be performed only if in S120 the first media stream is in the group. In some embodiments, at least one of S110 and S120 may be performed only if the instruction is received in S130.

If,
- according to the information about the group, the first media stream originates from the sender (S120 = "yes"); and
- an instruction to apply the policy is received from the controller (S130 = "yes"),
the applying means 140 applies the policy on the received first media stream (S140). The policy includes at least passing or discarding the first media stream and/or selecting destinations for the first media stream depending on a result of the voice activity detection on the first audio stream at least if the first media stream is transporting media of some predefined media types.

Fig. 5 shows an apparatus according to an embodiment of the invention. The apparatus comprises at least one processor 610, at least one memory 620 including computer program code, and the at least one processor 610, with the at least one memory 620 and the computer program code, being arranged to cause the apparatus to at least perform at least the method according to any of Figs. 2 and 4.

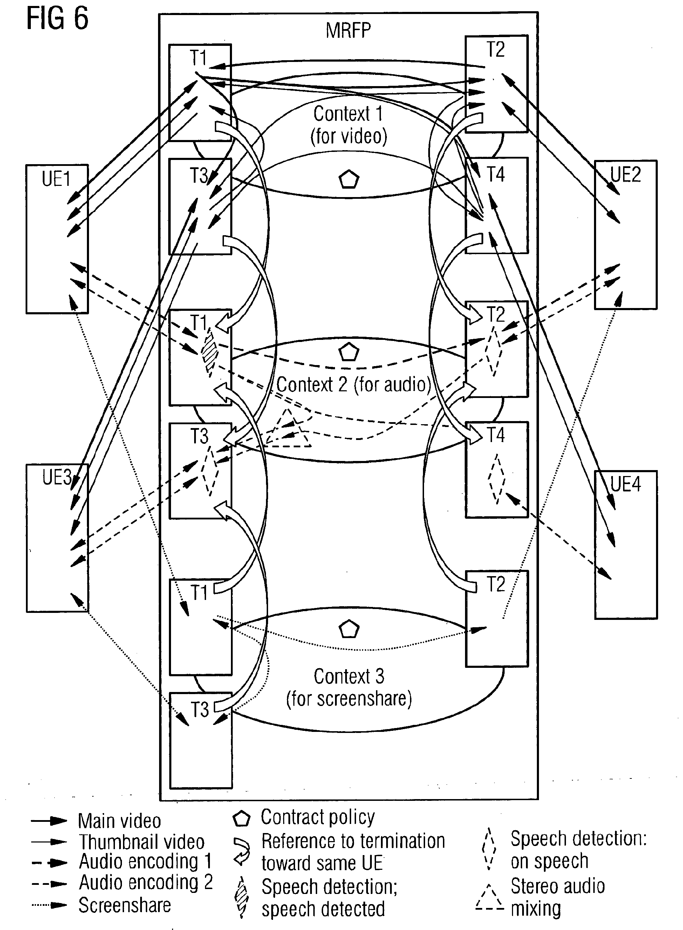

Fig. 6 depicts the MRFP configuration for a conference with 4 participants (UE1 to UE4) as an example embodiment of the invention.

When entering the conference, UE 1 and the MRFC negotiated the usage of 3 video streams (a bidirectional main video, a bidirectional thumbnail video and a unidirectional thumbnail video), 2 bidirectional audio streams (to allow for different encodings), and a bidirectional screenshare media stream.

UE 2 and the MRFC negotiated the usage of 2 video streams (a bidirectional main video and a bidirectional thumbnail video and a unidirectional thumbnail video), 2 bidirectional audio streams (to allow for different encodings), and a unidirectional screenshare media stream.

UE 3 and the MRFC negotiated the usage of 3 video streams (a bidirectional main video, a bidirectional thumbnail video and a unidirectional thumbnail video), 2 bidirectional audio streams (with the same encoding to allow for stereo audio), and a bidirectional screenshare media stream.

UE 4 and the MRFC negotiated the usage of 2 video streams (a bidirectional main video and a bidirectional thumbnail video and a unidirectional thumbnail video) and a bidirectional audio stream.

It is assumed that UE1 is used by the current speaker and UE2 is used by the most recent previous speaker.

The MRFC has configured the MRFP to allocate three H.248 contexts. For each of the H.248 context the MRFC has provided instructions according to the invention to apply policies on the streams according to the invention. This information element designates that received streams shall not be forwarded to other terminations in the same context according to normal H.248 procedures, i.e. based on equal stream identifier numbers assigned by the MRFC, but according to example sub-policy 1 such that voice activity detection of incoming audio streams is used to select video and/or screenshare. This instruction may also detail which policie(s) out of a list of possible policies to apply.

The MRFC has configured the MRFP in a way that designates media streams that are received from and/or sent to the same media source by requesting the allocation of stream end points in the same termination for all such media streams within a context. In addition, for the terminations in the video and screenshare media contexts, the MRFC has provided a reference towards the corresponding termination in the audio context that includes the context identifier and termination identifier of that audio termination.

According to the invention, the MRFC has also configured the MRFP to perform a voice activity detection for the terminations where audio streams are being received.

The MRFP selects the video streams sent towards UE1 per the following sub-policies: Main video received from UE2 where last previous voice activity was detected (sub-policies 6, 8). Thumbnail videos received from other UEs (sub-policy 6).

The MRFP selects the video streams sent towards UE2 per the following sub-policies: Main video received from UE1 where voice activity is being detected (sub-policies 6, 7). Thumbnail video received from another UE (sub-policy 6).

The MRFP selects the video streams sent towards UE3 per the following sub-policies: Main video received from UE1 where voice activity is being detected (sub-policies 6, 7). Thumbnail videos received from another UE (sub-policy 6).

The MRFP selects the video streams sent towards UE4 per the following sub-policies: Main video received from UE1 where voice activity is being detected (sub-policies 6, 7). Thumbnail videos received from another UE2 where last previous voice activity was detected (sub-policies 6, 11).

The MRFP selects the audio streams sent towards UE2 and UE4 from among the audio streams received from UE1 where voice activity is being detected based on their encoding (sub-policy 2).

The MRFP sends two audio streams towards UE3 because the MRFC has instructed the MRFP to allocate two bidirectional stream endpoints with the same encoding (sub-policy 3). The MRFP distributes audio streams received from different sources in a different manner between those two outgoing audio streams to provide the impression that different speakers are located at different positions.

The MRFP selects to send towards UE 2 and 3 the screenshare media stream received from UE1, because voice activity is being detected for UE1 (sub-policy 15).

Embodiments of the invention may be employed in a 3GPP network such as LTE or LTE-A, or in a 5G network. They may be employed also in other communication networks such as CDMA, EDGE, UTRAN networks, etc. including wireline networks.

One piece of information may be transmitted in one or plural messages from one entity to another entity. Each of these messages may comprise further (different) pieces of information. Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

According to the above description, it should thus be apparent that example embodiments of the present invention provide, for example a media resource function such as a MRFC and/or a MRFP, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. They may be implemented fully or partly in the cloud.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. An apparatus, comprising:
detecting means for detecting if a signaling indicating the desire to send plural media streams including an audio stream is received from a sender;
informing means for informing, if the signaling is received from the sender, a resource function processor that the plural media streams including the audio stream originate from the sender by instructing the resource function processor to assign stream endpoints within the same termination for the plural media streams of the sender;
instructing means for instructing, if the signaling is received from the sender, the resource function processor to perform voice activity detection on the audio stream; and
instructing means for instructing the resource function processor to apply a policy on the plural media streams, wherein the policy includes passing or discarding at least some of the plural media streams and selecting destinations for the plural media streams depending on a result of the voice activity detection on the audio stream.

2. A method, comprising:
detecting if a signaling indicating the desire to send plural media streams including an audio stream is received from a sender;
informing, if the signaling is received from the sender, a resource function processor that the plural media streams including the audio stream originates from the sender by instructing the resource function processor to assign stream endpoints within the same termination for the plural media streams of the sender;
instructing, if the signaling is received from the sender, the resource function processor to perform voice activity detection on the audio stream; and
instructing the resource function processor to apply a policy on the plural media streams, wherein the policy includes passing or discarding at least some of the plural media streams and selecting destinations for the plural media streams depending on a result of the voice activity detection on the audio stream.

3. A computer program product comprising instructions which, when the program is executed by a computer, cause the computer to:
detect if a signaling indicating the desire to send plural media streams including an audio stream is received from a sender;
inform, if the signaling is received from the sender, a resource function processor that the plural media streams including the audio stream originates from the sender by instructing the resource function processor to assign stream endpoints within the same termination for the plural media streams of the sender;
instruct, if the signaling is received from the sender, the resource function processor to perform voice activity detection on the audio stream; and
instruct the resource function processor to apply a policy on the plural media streams, wherein the policy includes passing or discarding at least some of the plural media streams and selecting destinations for the plural media streams depending on a result of the voice activity detection on the audio stream.

## Patentansprüche

1. Vorrichtung, die Folgendes umfasst:
Detektionsmittel zum Detektieren, ob eine Signalisierung, die den Wunsch anzeigt, mehrere Medienstreams zu senden, die einen Audiostream beinhalten, von einem Absender empfangen wird;
Informationsmittel zum Informieren, sofern die Signalisierung vom Absender empfangen wird, eines Ressourcenfunktionsprozessors, dass die mehreren Medienstreams, die den Audiostream beinhalten, vom Absender kommen, durch Anweisen des Ressourcenfunktionsprozessors, Streamendpunkte für die mehreren Medienstreams des Absenders innerhalb desselben Abschlusses zuzuweisen;
Anweisungsmittel zum Anweisen des Ressourcenfunktionsprozessors, eine Sprachaktivitätsdetektion am Audiostream durchzuführen, sofern die Signalisierung vom Absender empfangen wird; und
Anweisungsmittel zum Anweisen des Ressourcenfunktionsprozessors, eine Richtlinie auf die mehreren Medienstreams anzuwenden, wobei die Richtlinie das Durchlassen oder das Verwerfen von mindestens einigen der mehreren Medienstreams und das Auswählen von Zielen für die mehreren Medienstreams in Abhängigkeit von einem Ergebnis der Sprachaktivitätsdetektion am Audiostream beinhaltet.

2. Verfahren, das Folgendes umfasst:
Detektieren, ob eine Signalisierung, die den Wunsch anzeigt, mehrere Medienstreams zu senden, die einen Audiostream beinhalten, von einem Absender empfangen wird;
Informieren, sofern die Signalisierung vom Absender empfangen wird, eines Ressourcenfunktionsprozessors, dass die mehreren Medienstreams, die den Audiostream beinhalten, vom Absender kommen, durch Anweisen des Ressourcenfunktionsprozessors, Streamendpunkte für die mehreren Medienstreams des Absenders innerhalb desselben Abschlusses zuzuweisen;
Anweisen des Ressourcenfunktionsprozessors, eine Sprachaktivitätsdetektion am Audiostream durchzuführen, sofern die Signalisierung vom Absender empfangen wird; und
Anweisen des Ressourcenfunktionsprozessors, eine Richtlinie auf die mehreren Medienstreams anzuwenden, wobei die Richtlinie das Durchlassen oder das Verwerfen von mindestens einigen der mehreren Medienstreams und das Auswählen von Zielen für die mehreren Medienstreams in Abhängigkeit von einem Ergebnis der Sprachaktivitätsdetektion am Audiostream beinhaltet.

3. Computerprogrammprodukt, das Anweisungen umfasst, die, wenn das Programm von einem Computer ausgeführt wird, den Computer zu Folgendem veranlassen:
Detektieren, ob eine Signalisierung, die den Wunsch anzeigt, mehrere Medienstreams zu senden, die einen Audiostream beinhalten, von einem Absender empfangen wird;
Informieren, sofern die Signalisierung vom Absender empfangen wird, eines Ressourcenfunktionsprozessors, dass die mehreren Medienstreams, die den Audiostream beinhalten, vom Absender kommen, durch Anweisen des Ressourcenfunktionsprozessors, Streamendpunkte für die mehreren Medienstreams des Absenders innerhalb desselben Abschlusses zuzuweisen;
Anweisen des Ressourcenfunktionsprozessors, eine Sprachaktivitätsdetektion am Audiostream durchzuführen, sofern die Signalisierung vom Absender empfangen wird; und
Anweisen des Ressourcenfunktionsprozessors, eine Richtlinie auf die mehreren Medienstreams anzuwenden, wobei die Richtlinie das Durchlassen oder das Verwerfen von mindestens einigen der mehreren Medienstreams und das Auswählen von Zielen für die mehreren Medienstreams in Abhängigkeit von einem Ergebnis der Sprachaktivitätsdetektion am Audiostream beinhaltet.

## Revendications

1. Appareil, comprenant :
des moyens de détection pour détecter si une signalisation indiquant le souhait d'envoyer des flux de médias multiples comportant un flux audio est reçue d'un expéditeur ;
des moyens d'information pour, si la signalisation est reçue de l'expéditeur, informer un processeur de fonction de ressources que le flux de médias multiples comportant le flux audio provient de l'expéditeur, en ordonnant au processeur de fonction de ressources d'attribuer des terminaux de flux dans la même terminaison pour le flux de médias multiples de l'expéditeur ;
des moyens d'instruction pour, si la signalisation est reçue de l'expéditeur, ordonner au processeur de fonction de ressources de réaliser une détection d'activité vocale sur le flux audio ; et
des moyens d'instruction pour ordonner au processeur de fonction de ressources d'appliquer une politique sur le flux de médias multiples, dans lequel la politique comporte le passage ou le rejet d'au moins certains des flux de médias multiples et la sélection de destinations pour le flux de médias multiples en fonction du résultat de la détection d'activité vocale sur le flux audio.

2. Procédé, comprenant :
la détection de la réception ou non, d'un expéditeur, d'une signalisation indiquant le souhait d'envoyer des flux de médias multiples comportant un flux audio ;
si la signalisation est reçue de l'expéditeur, l'information d'un processeur de fonction de ressources que le flux de médias multiples comportant le flux audio provient de l'expéditeur, en ordonnant au processeur de fonction de ressources d'attribuer des terminaux de flux dans la même terminaison pour le flux de médias multiples de l'expéditeur ;
si la signalisation est reçue de l'expéditeur, l'instruction au processeur de fonction de ressources de réaliser une détection d'activité vocale sur le flux audio ; et
l'instruction au processeur de fonction de ressources d'appliquer une politique sur le flux de médias multiples, dans lequel la politique comporte le passage ou le rejet d'au moins certains des flux de médias multiples et la sélection de destinations pour le flux de médias multiples en fonction du résultat de la détection d'activité vocale sur le flux audio.

3. Produit de programme informatique comprenant des instructions qui, lorsque le programme est exécuté par un ordinateur, amènent l'ordinateur à :
détecter si une signalisation indiquant le souhait d'envoyer des flux de médias multiples comportant un flux audio est reçue d'un expéditeur ;
si la signalisation est reçue de l'expéditeur, informer un processeur de fonction de ressources que le flux de médias multiples comportant le flux audio provient de l'expéditeur, en ordonnant au processeur de fonction de ressources d'attribuer des terminaux de flux dans la même terminaison pour le flux de médias multiples de l'expéditeur ;
si la signalisation est reçue de l'expéditeur, ordonner au processeur de fonction de ressources de réaliser une détection d'activité vocale sur le flux audio ; et
ordonner au processeur de fonction de ressources d'appliquer une politique sur le flux de médias multiples, dans lequel la politique comporte le passage ou le rejet d'au moins certains des flux de médias multiples et la sélection de destinations pour le flux de médias multiples en fonction du résultat de la détection d'activité vocale sur le flux audio.
